# EUROPEAN PATENT SPECIFICATION

(11) **EP 3 118 063 B1**
(45) Date of publication and mention of the grant of the patent: **06.06.2018**
(21) Application number: 15761678.0
(22) Date of filing: 05.03.2015
(51) Int. Cl.: B60R 11/02, B60K 35/00, B60R 1/00, B60R 1/12, H04N 7/18

(54) **VEHICLE-MOUNTED DISPLAY DEVICE**
FAHRZEUGMONTIERTE ANZEIGEVORRICHTUNG
DISPOSITIF D'AFFICHAGE EMBARQUÉ DANS UN VÉHICULE

(30) Priority: 13.03.2014 JP 2014049645
(43) Date of publication of application: 18.01.2017
(73) Proprietor: Panasonic Intellectual Property Management Co., Ltd., Osaka-shi, Osaka 570-6207 (JP)
(72) Inventor: MORISHITA, Kazuhiro, Osaka-shi Osaka 540-6207 (JP); AKAHORI, Hitoaki, Osaka-shi Osaka 540-6207 (JP); KUWABARA, Takashi, Osaka-shi Osaka 540-6207 (JP); SUENAGA, Terumitsu, Osaka-shi Osaka 540-6207 (JP)
(74) Representative: Vigand, Philippe
(86) International application number: PCT/JP2015/001173
(87) International publication number: WO 2015/136894

(56) References cited:
- JP-A- 2008 288 963
- JP-A- 2014 015 198
- JP-A- 2014 015 198

## Description

### TECHNICAL FIELD

The present invention relates to a vehicle-mountable display device including an image display in an inner rearview mirror of a vehicle. A vehicle-mountable display device reflecting the preamble of present claim 1 is disclosed by the document JP 2014 015198.

### BACKGROUND ART

A conventional vehicle-mountable display device includes an image display inside an inner rearview mirror body of a vehicle and allows the image display covered with a half mirror to display an image captured by a camera installed in the vehicle (e.g., see PTL 1).

### CITATION LIST

### PATENT LITERATURE

PTL 1: Japanese Patent Laid-Open Publication No.11-78693

### SUMMARY

A vehicle-mountable display device includes an image display unit configured to be mounted to a position of an inner rearview mirror in a cabin of a vehicle, a driving unit for driving the image display unit, and an orientation controller for controlling the driving unit to control an orientation of the image display unit. The orientation controller is configured to turn the orientation of the image display unit into a rearview-mirror-mode orientation when the image display unit operates at a rearview mirror mode in which the half-mirror is used as a rearview mirror. The orientation controller is configured to turn the orientation of the image display unit into a display-mode orientation different from the rearview-mirror-mode orientation when the image display unit operates at a display mode in which the image display displays the captured image. A normal line of the half mirror at the display-mode orientation is closer to a driver than the normal line of the half mirror at the rearview-mirror-mode orientation.

The vehicle-mountable display device improves visibility of the image display for a driver.

### BRIEF DESCRIPTION OF DRAWINGS

FIG. 1 is a block diagram of a vehicle-mountable display device in accordance with Exemplary Embodiment 1.
FIG. 2A is a schematic diagram of a display-mode orientation of the vehicle-mountable display device in accordance with Embodiment 1.
Figure 2B is a schematic diagram of a rearview-mirror-mode orientation of the vehicle-mountable display device in accordance with Embodiment 1.
FIG. 3 is a schematic diagram of an image display unit in accordance with Exemplary Embodiment 2 for illustrating an operation of the image display unit.
FIG. 4 is a schematic diagram of an image display unit in accordance with Exemplary Embodiment 3 for illustrating an operation of the image display unit.
FIG. 5 is a schematic diagram of an image display unit in accordance with Exemplary Embodiment 4 for illustrating an operation of the image display unit.
FIG. 6 is a schematic diagram of an image display unit in accordance with Exemplary Embodiment 5 for illustrating an operation of the image display unit.
FIG. 7 is a schematic diagram of an image display unit in accordance with Exemplary Embodiment 6 for illustrating an operation of the image display unit.

### DETAIL DESCRIPTION OF PREFERRED EMBODIMENTS

### Exemplary Embodiment 1

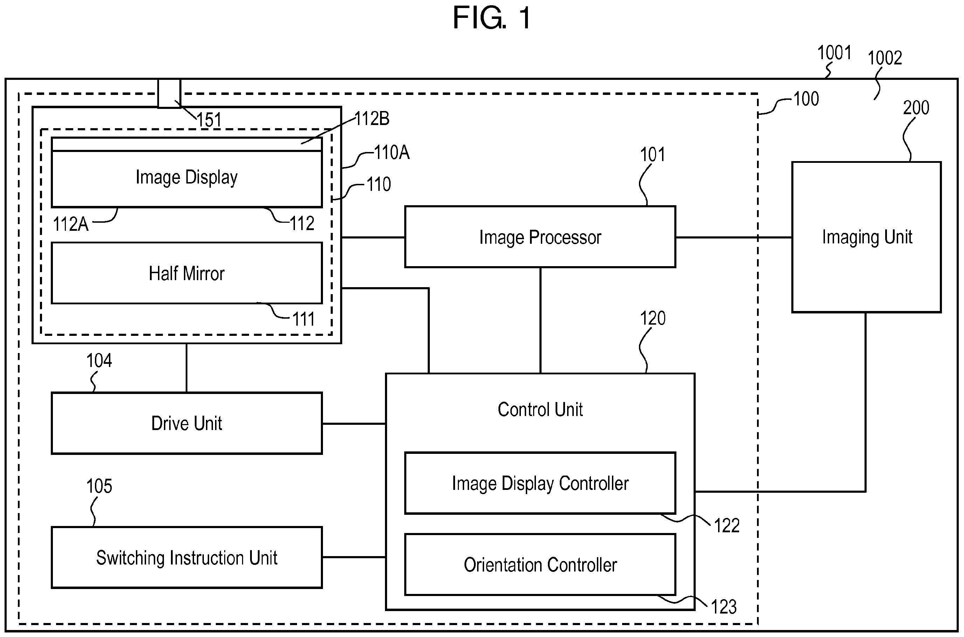

FIG. 1 is a block diagram of vehicle display device 100 in accordance with Exemplary Embodiment 1.

Image display unit 110 is installed at a mounting position of an inner rearview mirror in cabin 1002 of vehicle 1001 with mounting member 151. Image display unit 110 includes half mirror 111 and image display 112. Half mirror 111 is disposed on a front surface of image display 112 functioning as display screen 112A. Half mirror 111 functions as a rearview mirror when backlight 112B of image display 112 is turned off, that is, when image display 112 is turned off.

When the image display is turned on, i.e., when backlight 112B of image display 112 is turned on, an image on display screen 112A of image display 112 transmits through half mirror 111 to be displayed on image display unit 110.

For instance, imaging unit 200 implemented by a camera is mounted in vehicle 1001 to capture an image outside vehicle 1001. Then, the captured image is displayed on the front surface of image display 112 functioning as display screen 112A. Image display 112 is implemented by, for example, a liquid crystal display.

Display screen 112A of image display 112 has substantially the same size as half mirror 111. Display screen 112A of image display 112 is covered with half mirror 111.

At the mounting position of image display unit 110, driving unit 104 changes an orientation of image display unit 110. Driving unit 104 includes, for example, a motor for changing the orientation of image display unit 110 vertically, and another motor for changing the orientation of image display unit 110 horizontally.

Switching instruction unit 105 instructs control unit 120 to switch image display unit 110 functions, i.e., whether to use image display unit 110 as a rearview mirror or to use image display 112 as a display for displaying an image thereon.

Image processor 101 processes the image captured outside vehicle 1001 to be displayed on image display 112 as an image. For instance, image processor 101 mounted in vehicle 1001 performs a viewpoint change such that the image outside vehicle 1001 captured by imaging unit 200 is changed to an image viewed through the rearview mirror. Image processor 101 controls, for example, a contrast of the image. Another image may be superimposed on the image outside vehicle 1001 captured by imaging unit 200 mounted in vehicle 1001. The image processed by image processor 101 is displayed on display screen 112A of image display 112.

Control unit 120 entirely controls vehicle-mountable display device 100. Control unit 120 is implemented by a CPU for controlling operation, a ROM for storing a control program, a RAM for temporarily storing data and control data, a system clock used for measuring time points, and a timer used for measuring a time.

Control unit 120 includes image display controller 122 for controlling image display 112. Image display controller 122 controls, for example, brightness of backlight 112B of image display 112. Image display controller 122 switches, in response to an instruction from switching instruction unit 105, between an ON state in which image display 112 displays an image thereon and an OFF state in which image display 112 displays no image thereon.

Control unit 120 further includes orientation controller 123 that drives driving unit 104 to control the orientation of image display unit 110.

Orientation controller 123 controls driving unit 104 driving image display unit 110, and turns the orientation of image display unit 110 selectively into a display-mode orientation and a rearview-mirror-mode orientation. In a display mode, the captured image is displayed on display screen 112A of image display 112, thus utilizing image display unit 110 as a display. The display-mode orientation is an orientation of image display unit 110 at the display mode.

In a rearview mirror mode, image display 112 is in the OFF state, i.e., backlight 112B is turned off, thus utilizing half mirror 111 of image display unit 110 as a rearview mirror. The rearview-mirror-mode orientation is an orientation of image display unit 110 at the rearview mirror mode.

Orientation controller 123 previously stores the display-mode orientation and the rearview-mirror-mode orientation. Orientation controller 123 stores horizontal angles or vertical angles of image display unit 110 with respect to mounting member 151 as the display-mode orientation and the rearview-mirror-mode orientation.

In response to an instruction from switching instruction unit 105, orientation controller 123 controls driving unit 104 to positions image display unit 110 at an angle out of the stored angles, and thus, the orientation of image display unit 110 is turned into the display-mode orientation or the rearview-mirror-mode orientation. Further, orientation controller 123 changes the orientation of image display unit 110 from the display-mode orientation to the rearview-mirror-mode orientation or from the rearview-mirror-mode orientation to the display-mode orientation.

Imaging unit 200 is mounted to vehicle 1001 to capture an image outside vehicle 1001, and outputs the captured image to vehicle-mountable display device 100. Imaging unit 200 is installed to, for example, a rear portion of vehicle 1001 to capture an image behind vehicle 1001. Imaging unit 200 is implemented by, for example, a camera.

An operation of vehicle-mountable display device 100 will be described below.

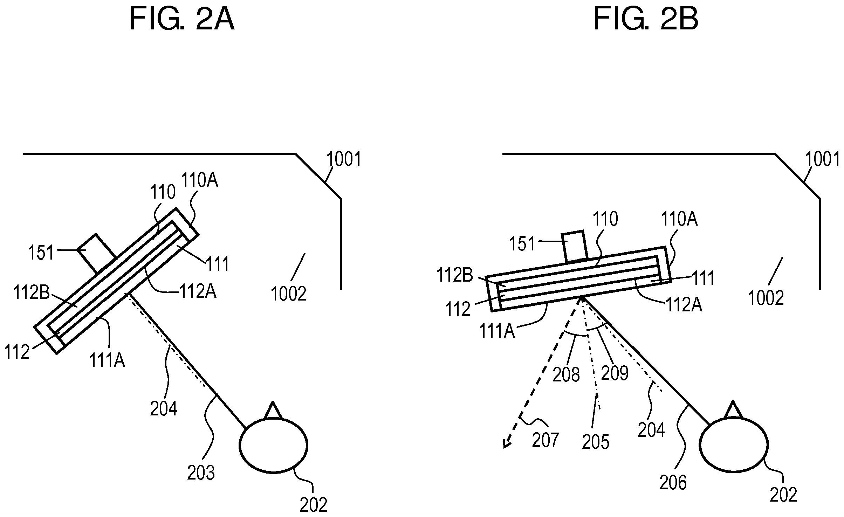

FIGs. 2A and 2B are schematic diagrams of vehicle-mountable display device 100 for illustrating the display-mode orientation and the rearview-mirror-mode orientation, respectively.

FIG. 2A is a schematic diagram showing the display-mode orientation, and shows a positional relationship of image display unit 110 and driver 202 in the display-mode orientation. Image display unit 110 is in the display mode. Driver 202 observes an image displayed on display screen 112A of image display 112 through half mirror 111. As indicated by line 203 of sight, image display unit 110 having the front surface functioning as half mirror 111 is located at a position substantially facing directly driver 202. That is, display screen 112A of image display 112 is located perpendicular to line 203 of sight of the driver.

Upon receiving an instruction of switching from the rearview mirror mode to the display mode from switching instruction unit 105, orientation controller 123 controls driving unit 104 to change the orientation of image display unit 110 such that image display unit 110 (image display 112) directly faces driver 202.

FIG. 2B is a schematic diagram of the rearview-mirror-mode orientation, and illustrates a positional relationship of image display unit 110 and driver 202 in the rearview-mirror-mode orientation. Image display unit 110 is in the rearview mirror mode. An image in rearward viewing direction 207 is reflected by half mirror 111 to enter into line 206 of sight of driver 202. In order for driver 202 to observe the image in rearward view direction 207, image display unit 110 does not directly face driver 202 due to a relationship between incident angle 208 of the image to half mirror 111 and reflection angle 209 of the image to driver 202.

Half mirror 111 has reflection surface 111A. With regard to a relationship between normal line 205 of half mirror 111 perpendicular to reflection surface 111A in the rearview-mirror-mode orientation and normal line 204 of half mirror 111 perpendicular to reflection surface 111A in the display-mode orientation, normal line 204 is located on a side to driver 202 with respect to normal line 205. In other words, normal line 204 is closer to the driver 202 than normal line 205 is.

Upon receiving the instruction of switching from the display mode to the rearview mirror mode from switching instruction unit 105, orientation controller 123 controls driving unit 104 to change the orientation of image display unit 110 such that image display unit 110 (image display 112) does not directly face driver 202.

As described above, in vehicle-mountable display device 100 in accordance with Embodiment 1, orientation controller 123 sets the orientation of image display unit 110 such that image display unit 110 substantially directly faces driver 202 at the display mode, thereby improving visibility of image display 112.

However, in the conventional vehicle-mountable display device described above, switching between an inner rearview mirror and an image display is not disclosed, and visibility of the image display is not considered.

According to Embodiment 1, orientation controller 123 previously stores the display-mode orientation and the rearview-mirror-mode orientation. Orientation controller 123 may be configured such that driver 202 moves the orientation of image display unit 110 manually, and then, an orientation of image display unit 110 determined by driver 202 is stored as the display-mode orientation or the rearview-mirror-mode orientation.

In accordance with Embodiment 1, the display-mode orientation is described such that image display unit 110 having the front surface functioning as half mirror 111 substantially directly faces driver 202. The display-mode orientation may be changed such that normal line 204 of half mirror 111 of image display unit 110 in the display mode is located on a side to driver 202 with respect to normal line 205 of half mirror 111 of image display unit 110 in the rearview mirror mode, i.e., normal line 204 is close to driver 202 than normal line 205 is. This configuration improves visibility of image display 112 of image display unit 110 in the display mode as compared with in the rearview mirror mode.

When abnormality occurs, orientation controller 123 may be configured to change the orientation of image display unit 110 from the display-mode orientation to the rearview-mirror-mode orientation at a transition speed faster than a normal speed at which the orientation of image display unit 110 changes from the display-mode orientation to the rearview-mirror-mode orientation upon receiving, from switching instruction unit 105, the instruction of switching from the display mode to the rearview mirror mode.

The abnormality indicates the state where the image captured by imaging unit 200 is not normal, for example, a so-called dust storm condition or an overexposure condition. When the abnormality occurs, the orientation of image display unit 110 is quickly changed to the rearview-mirror-mode orientation, thereby enabling image display unit 110 to ensure visibility quickly as a rearview mirror.

Image processor 101 may be configured such that an indicator image indicating that image display unit 110 is in transition from the display mode to the rearview mirror mode is superimposed on the image captured by imaging unit 200, and image display 112 may be configured such that display screen 112A displays thereon the image which is captured by imaging unit 200 and which has the indicator image superimposed thereon.

Driver 202 is reminded that the mode is in transition, the mode can be switched without feeling uncomfortable.

Image display unit 110, image processor 101, driving unit 104, and control unit 120 may be accommodated inside rearview mirror 110A. Alternatively, image display unit 110 and driving unit 104 may be accommodated inside rearview mirror 110A to constitute image processor 101, control unit 120, and switching instruction unit 105 as a separate unit apart from inner rearview mirror 110A. Components to be accommodated inside inner rearview mirror 110A as vehicle-mountable display device 100 may optionally be constituted.

### Exemplary Embodiment 2

A vehicle-mountable display device in accordance with Exemplary Embodiment 2 will be described below. A block diagram showing a configuration of the vehicle-mountable display device is the same as Embodiment 1.

The vehicle-mountable display device in accordance with Embodiment 2 is different from the device in accordance with Embodiment 1 in that, during the transition from the display mode to the rearview mirror mode, image display controller 122 causes image display 112 to be in the OFF state at a time point when image display unit 110 is turned into the rearview-mirror-mode orientation from the display-mode orientation under control of orientation controller 123. That is, in the vehicle-mountable display device in accordance with Embodiment 2, during the transition from the display mode to the rearview mirror mode, image display controller 122 turns on image display 112 continuously until the time point when image display unit 110 is turned into the rearview-mirror-mode orientation from the display-mode orientation under control of orientation controller 123. Image display controller 122 turns off image display 112 at the time point the orientation of image display unit 110 changes into the rearview-mirror-mode orientation.

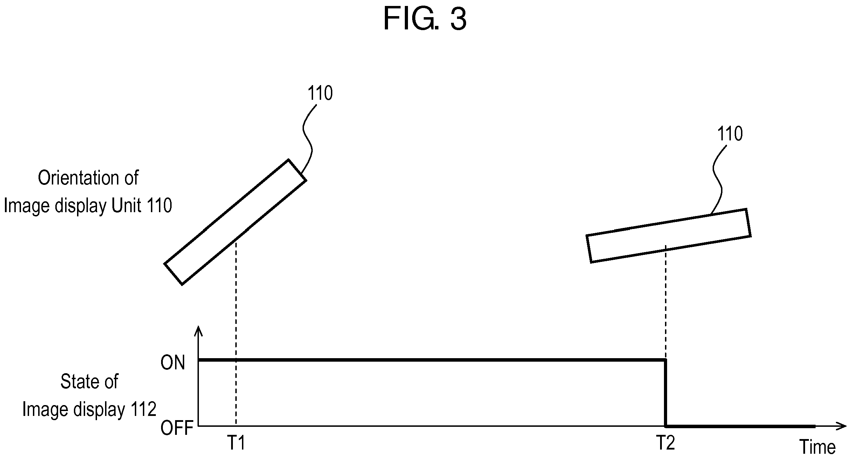

FIG. 3 is a schematic diagram of image display unit 110 in accordance with Embodiment for illustrating an operation of image display unit 110, and illustrates a state of image display 112 and orientations of image display unit 110. The orientation of image display unit 110 at time point T1 is the display-mode orientation. The orientation of image display unit 110 is turned into the rearview-mirror-mode orientation at the time point T2. A duration from time point T1 to time point T2 is a transition time from the display-mode orientation to the rearview-mirror-mode orientation.

Image display 112 is turned on continuously until time point T2, and is turned off at time point T2, i.e., at the time point when image display unit 110 is turned into the rearview-mirror-mode orientation.

As described above, in the vehicle-mountable display device in accordance with Embodiment 2, image display 112 is turned off at the time point when image display unit 110 is turned into the rearview-mirror-mode orientation. This operation prevents an image, which is different from a rearward background which a driver desires, from being displayed on half mirror 111 during the transition from the display mode to the rearview mirror mode, thereby switching the modes seamlessly while securing safety.

### Exemplary Embodiment 3

A vehicle-mountable display device in accordance with Exemplary Embodiment 3 will be described below. A block diagram showing a configuration of the vehicle-mountable display device is the same as Embodiment 1.

The vehicle-mountable display device in accordance with Embodiment 3 is different from the device in accordance with Embodiment 1 in that, during the transition from the display mode to the rearview mirror mode, image display controller 122 is configured to increase brightness of backlight 112B of image display 112 gradually as the orientation of image display unit 110 changes from the display-mode orientation to the rearview-mirror-mode orientation.

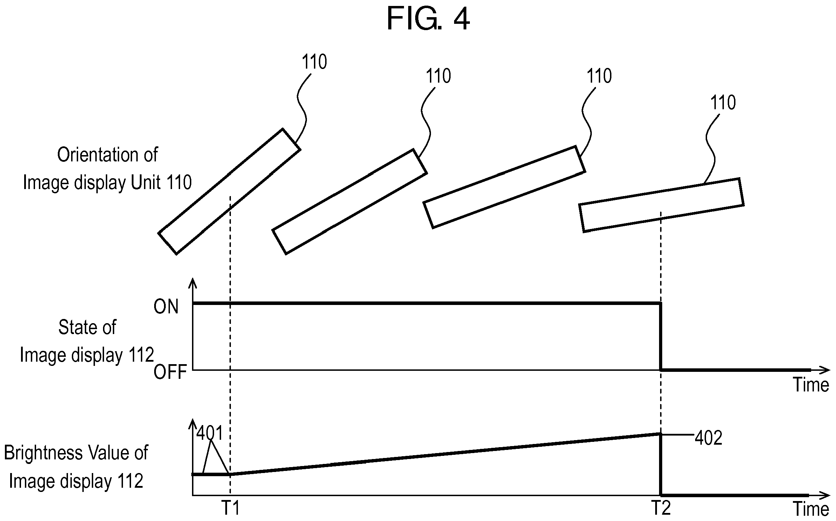

FIG. 4 is a schematic diagram of image display unit 110 in accordance with Embodiment 3 for illustrating an operation of image display unit 110, and illustrates a state of image display 112, brightness of backlight 112B of image display 112, and orientations of image display unit 110. Image display unit 110 at time point T1 is in the display-mode orientation. Image display unit 110 is turned into the rearview-mirror-mode orientation at time point T2. A duration from time point T1 to time point T2 is a transition time from the display-mode orientation to the rearview-mirror-mode orientation.

In FIG. 4 brightness value 401 indicates the brightness in the display mode. For a normal image display in the display mode, 100% of the brightness value specified for image display 112 is not used, but, for example, 80% of the brightness value is used to display an image as the maximum value in the display mode.

In accordance with Embodiment 3, brightness of backlight 112B of image display 112 increases gradually as the orientation of image display unit 110 changes from the display-mode orientation to the rearview-mirror-mode orientation. The brightness value increases beyond the maximum value in normal image display to a predetermined value which is not larger than 100% of the brightness value specified for image display 112. Brightness value 402 indicates 90% of the brightness value specified for image display 112.

That is, the brightness value increases from time point T1 until time point T2 as the orientation of the image display unit 110 changes. The brightness value is set to be 90% of the brightness value specified for image display 112 at time point T2. After time point T2, the brightness value is set to be zero, i.e., backlight 112B is turned off, and then, control unit 120 causes image display unit 110 to be in the rearview mirror mode.

As described above, in the vehicle-mountable display device in accordance with Embodiment 3, during the transition from the display mode to the rearview mirror mode, brightness of image display 112 (backlight 112B) increases gradually as the orientation of image display unit 110 changes from the display-mode orientation to the rearview-mirror-mode orientation. This configuration improves visibility of image display 112 when the mode changes.

### Exemplary Embodiment 4

A vehicle-mountable display device in accordance with Exemplary Embodiment 4 will be described below. A block diagram showing a configuration of the vehicle-mountable display device is the same as Embodiment 1.

The vehicle-mountable display device in accordance with Embodiment 4 is different from the device in accordance with Embodiment 1 in that, during the transition from the display mode to the rearview mirror mode, image display controller 122 is configured to increase brightness of backlight 112B of image display 112 gradually as the orientation of image display unit 110 changes from the display-mode orientation to the rearview-mirror-mode orientation and decrease the brightness of backlight 112B of image display 112 gradually from the time point when the orientation of image display unit 110 is turned into the rearview-mirror-mode orientation, and then, cause image display 112 to be in an OFF state, i.e., to be turned off.

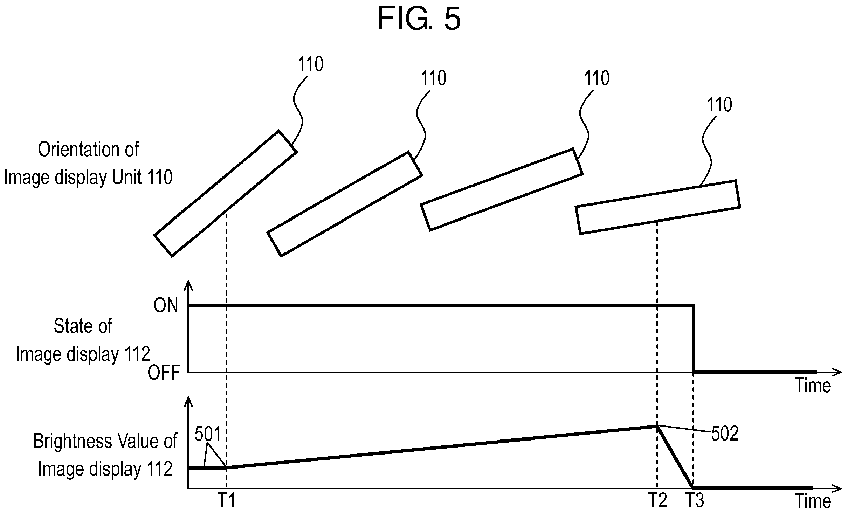

FIG. 5 is a schematic diagram of image display unit 110 in accordance with Embodiment 4 for illustrating an operation of image display unit 110, and illustrates a state of image display 112, a brightness value of backlight 112B of image display 112, and an orientation of image display unit 110. Image display unit 110 at time point T1 is in the display-mode orientation. Image display unit 110 is turned into the rearview-mirror-mode orientation at time point T2. A duration from time point T1 to time point T2 is a transition time from the display-mode orientation to the rearview-mirror-mode orientation.

In accordance with Embodiment 4, even when the orientation of image display unit 110 is turned into the rearview-mirror-mode orientation from the display-mode orientation, the display mode is continued. That is, the orientation of image display unit 110 is turned into the rearview-mirror-mode orientation at time T2, but image display 112 remains in an ON state, i.e., is turned on until time point T3, so that an image may displayed on display screen 112A of image display 112. After the orientation of image display unit 110 is turned into the rearview-mirror-mode orientation, the display mode continues for a duration from time point T2 to time point T3, e.g., for a duration ranging 1,000 milliseconds to 2,000 milliseconds.

Image display controller 122 increases brightness of backlight 112B of image display 112 gradually as the orientation of image display unit 110 changes from the display-mode orientation to the rearview-mirror-mode orientation.

In FIG. 5, brightness value 501 indicates a brightness value in the display mode. For a normal image display in the display mode, 100% of the brightness value specified for image display 112 is not used, but, for example, 80% of the brightness value is used to display images as the maximum value.

Image display controller 122 increases brightness of backlight 112B of image display 112 as the orientation of image display unit 110 changes from the display-mode orientation to the rearview-mirror-mode orientation. Herein, the brightness value increases beyond the maximum value in normal image display to a predetermined value not larger than 100% of the brightness value specified for image display 112. Brightness value 502 indicates 90% of the brightness value specified for image display 112.

Image display controller 122 increases the brightness of image display 112 gradually for a duration from time point T1 to time point T2. The brightness decreases gradually for a duration from time point T2 to time point T3, and then, decreases to zero at time point T3, i.e., backlight 112B is turned off. Image display 112 is in the OFF state, i.e. is turned off at time point T3, and image display unit 110 is in the rearview mirror mode. At time point T3, the orientation of image display unit 110 is completely turned into the rearview-mirror-mode orientation from the display-mode orientation.

As described above, in the vehicle-mountable display device in accordance with Embodiment 4, during the transition from the display mode to the rearview mirror mode, image display controller 122 increases brightness of image display 112 (backlight 112B) gradually as the orientation of image display unit 110 changes from the display-mode orientation to the rearview-mirror-mode orientation, and decreases the brightness of the image display 112 gradually from the time when the orientation of image display unit 110 is turned into the rearview-mirror-mode orientation, and then causes image display 112 to be in the OFF state, i.e., turned off. This configuration improves uncomfortable feeling at the time when the mode is switched while improving visibility of image display 112 at the time when the mode changes.

### Exemplary Embodiment 5

A vehicle-mountable display device in accordance with Exemplary Embodiment 5 will be described below. A block diagram showing a configuration of the vehicle-mountable display device is the same as Embodiment 1.

The vehicle-mountable display device in accordance with Embodiment 5 is different from the device in accordance with Embodiment 1 in that, during the transition from the display mode to the rearview mirror mode, image processor 101 is configured to increase contrast of the image gradually as the orientation of image display unit 110 changes from the display-mode orientation to the rearview-mirror-mode orientation, and image display controller 122 is configured to cause image display 112 to be in an OFF state, i.e., turned off at the time point when the orientation of image display unit 110 is turned into the rearview-mirror-mode orientation.

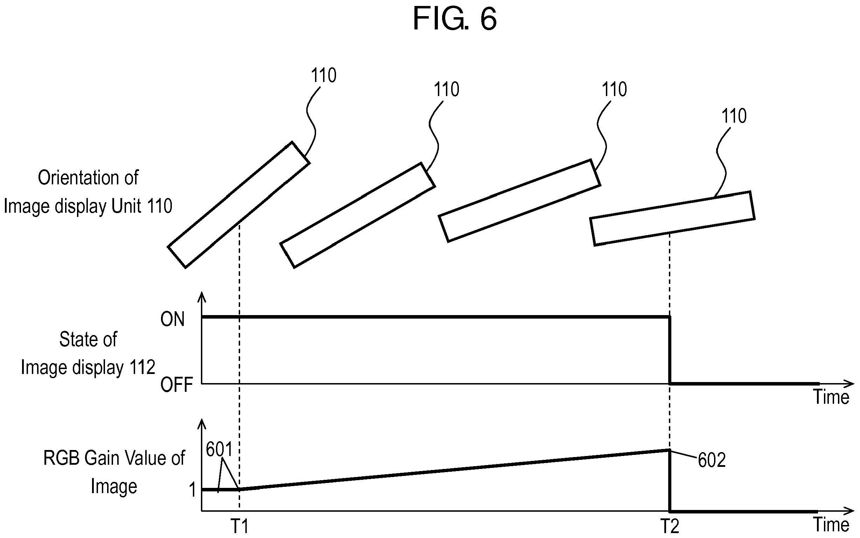

FIG. 6 is a schematic diagram of image display unit 110 in accordance with Embodiment 5 for illustrating an operation of image display unit 110, and illustrates a state of image display 112, an RGB gain value of image display 112, and an orientation of image display unit 110. Image display unit 110 at time point T1 is in the display-mode orientation. The orientation of image display unit 110 is turned into the rearview-mirror-mode orientation at time point T2. A duration from time point T1 to time point T2 is a transition time from the display-mode orientation to the rearview-mirror-mode orientation.

In FIG. 6, RGB gain value 601 of an image is a gain value of the image in the display mode at time point T1. Image processor 101 increases the gain value as the orientation of image display unit 110 changes from the display-mode orientation to the rearview-mirror-mode orientation. Assuming that gain value 601 until time point T1 is defined as 1, gain value 602 at time point T2 is, for example, 1.2. The gain value is proportional to the contrast of the image displayed on display screen 112A of image display 112. That is, the contrast of the image increases as the gain value increases while the contrast of the image decreases as the gain value decreases. In FIG. 6, the gain value after time point T2 is zero. However, image display 112 is turned off after time point T2, thereby making the image displayed on display screen 112A invisible. Therefore, another value, such as gain value 601, may be employed after time point T2. The gain value after time point T2 may be set to zero, thereby reducing power consumption of image display unit 110.

Image display controller 122 causes image display 112 to be in the OFF state, i.e., turns off image display 112 at the time point T2 when the orientation of image display unit 110 is turned into the rearview-mirror-mode orientation.

As described above, in the vehicle-mountable display device in accordance with Embodiment 5, during the transition from the display mode to the rearview mirror mode, image processor 101 increases contrast of an image gradually as the orientation of image display unit 110 changes from the display-mode orientation to the rearview-mirror-mode orientation. Image display controller 122 turns off image display 112 the time point when the orientation of image display unit 110 is turned into the rearview-mirror-mode orientation. This configuration improves visibility of image display 112 at the time when the mode changes. In other word, in the vehicle-mountable display device in accordance with Embodiment 5, during the transition from the display mode to the rearview mirror mode, image processor 101 increases contrast of the image gradually as the orientation of image display unit 110 changes from the display-mode orientation to the rearview-mirror-mode orientation. Then, image display controller 122 turns on image display 112 continuously until the time point when the orientation of image display unit 110 is turned into the rearview-mirror-mode orientation, and then turns off image display 112. This configuration improves visibility of image display 112 at the time when the mode changes.

### Exemplary Embodiment 6

A vehicle-mountable display device in accordance with Exemplary Embodiment 6 will be described below. A block diagram showing a configuration of the vehicle-mountable display device is the same as Embodiment 1.

The vehicle-mountable display device in accordance with Embodiment 6 is different from the device in accordance with Embodiment 1 in that, during the transition from the display mode to the rearview mirror mode, image processor 101 is configured to increase contrast of an image gradually as the orientation of image display unit 110 changes the display-mode orientation to the rearview-mirror-mode orientation under the control of orientation controller 123, and then, decrease the contrast of the image gradually from the tine when the orientation of image display unit 110 is turned into the rearview-mirror-mode orientation. Image display controller 122 is configured to turn off image display 112 at the time point when the contrast of the image decreases to an initial contrast, i.e., the contrast at the display mode.

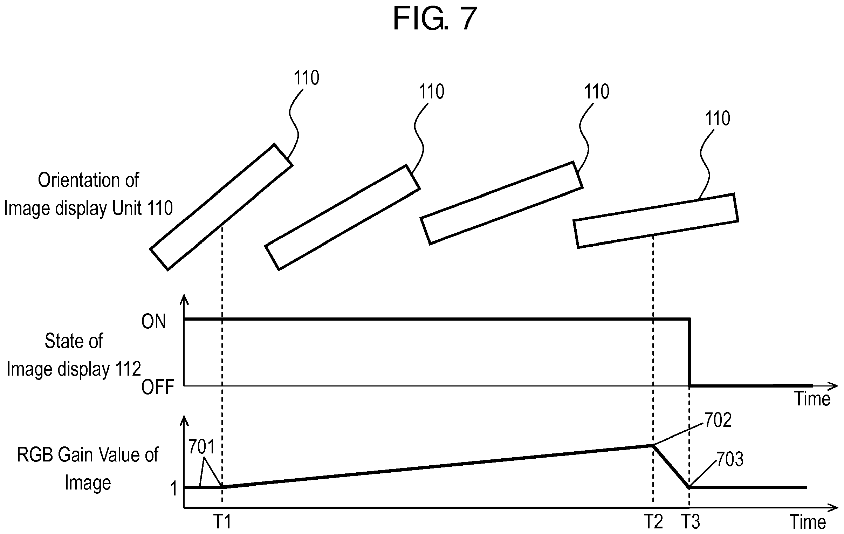

FIG. 7 is a schematic diagram of image display unit 110 in accordance with Embodiment 6 for illustrating an operation of image display unit 110, and illustrates a state of image display 112, an RGB gain of image display 112, and an orientation of image display unit 110. Image display unit 110 at time point T1 is in the display-mode orientation. Image display unit 110 is turned into the rearview-mirror-mode orientation at time point T2. A duration from time point T1 to time point T2 is a transition time from the display-mode orientation to the rearview-mirror-mode orientation.

In accordance with Embodiment 6, the display mode continues at the time when the orientation of image display unit 110 is turned into the rearview-mirror-mode orientation. That is, the orientation of image display unit 110 is turned into the rearview-mirror-mode orientation at time point T2, but image display 112 is turned on continuously until time point T3 and displays thereon an image.

After the orientation of image display unit 110 is turned into the rearview-mirror-mode orientation, the display mode continues during from time point T2 to time point T3, e.g., for a duration ranging 1,000 milliseconds to 2,000 milliseconds.

In FIG. 7, RGB gain value 701 of an image is a gain value of the image in the display mode at time point T1. Image processor 101 increases the gain value as the orientation of image display unit 110 changes from the display-mode orientation to the rearview-mirror-mode orientation. Assuming that gain value 701 until time point T1 is 1, gain value 702 at time point T2 is, for example, 1.2. The gain value is proportional to contrast of the image displayed on display screen 112A of image display 112. That is, the contrast of the image increases as the gain value increases while the contrast of the image decreases as the gain value decreases. In FIG. 7, the gain value after time point T3 is gain value 703. However, image display 112 is turned off after time point T3, thereby making the image displayed on display screen 112A invisible. Therefore, another value, such as a gain value of zero, may be employed after time point T3. The gain value of zero after time point T3 reduces power consumption of image display unit 110.

Image processor 101 decreases the gain value gradually from gain value 702 which is a gain value at the time when the orientation of image display unit 110 is turned into the rearview-mirror-mode orientation, and causes the gain value at time point T3 to be an initial gain of 1 (gain value 703), i.e., returns to initial gain value 701 in a duration ranging from 1,000 milliseconds to 2,000 milliseconds.

Image display controller 122 turns off image display 112 at time point T3 which is the time when the gain value of the image is turned into the initial gain value.

As described above, in the vehicle-mountable display device in accordance with Embodiment 6, during the transition from the display mode to the rearview mirror mode, image processor 101 increases contrast of the image gradually as the orientation of image display unit 110 changes from the display-mode orientation to the rearview-mirror-mode orientation, and decreases the contrast of the image gradually from the time when the orientation of image display unit 110 is turned into the rearview-mirror-mode orientation. Image display controller 122 turns off image display 112 at the time when the contrast of the image is turned into the initial contrast in the display mode. This configuration improves uncomfortable feeling at the time when the mode is switched while improving visibility of image display 112 at the time when the mode changes.

### INDUSTRIAL APPLICABILITY

A vehicle-mountable display device according to the present invention is useful as an electronic mirror.

### REFERENCE MARKS IN THE DRAWINGS

- 100: vehicle-mountable display device
- 101: image processor
- 110: image display unit
- 111: half mirror
- 112: image display
- 104: driving unit
- 105: switching instruction unit
- 122: image display controller
- 123: orientation controller
- 200: imaging unit

## Claims

1. A vehicle-mountable display device (100) comprising:
an image display unit (110) configured to be mounted to a position of an inner rearview mirror in a cabin (1002) of a vehicle (1001), the image display unit (110) including an image display (112) capable of displaying an image captured by an imaging unit (200) mounted in the vehicle (1001),
**characterized by** comprising a half mirror (111) disposed on a front surface of the image display (112);
a driving unit (104) for driving the image display unit (110); and
an orientation controller (123) for controlling the driving unit to control an orientation of the image display unit (110), wherein the orientation controller (123) is configured to:
turn the orientation of the image display unit (110) into a rearview-mirror-mode orientation when the image display unit (110) operates at a rearview mirror mode in which the half-mirror is used as a rearview mirror; and
turn the orientation of the image display unit (110) into a display-mode orientation different from the rearview-mirror-mode orientation when the image display unit (110) operates at a display mode in which the image display (112) displays the captured image, and
wherein a normal line of the half mirror (111) at the display-mode orientation is closer to a driver than the normal line of the half mirror (111) at the rearview-mirror-mode orientation.

2. The vehicle-mountable display device (100) according to claim 1, wherein the display-mode orientation is positioned such that the image display unit (110) having a front surface as the half mirror (111) substantially directly faces the driver.

3. The vehicle-mountable display device (100) according to claim 1, wherein the display-mode orientation is an orientation predetermined by the driver.

4. The vehicle-mountable display device (100) according to any one of claims 1 to 3, further comprising
an image display controller (122) for controlling the image display (112),
wherein the image display controller (122) is configured to:
turn on the image display unit (110) continuously until a time point when the orientation of the image display unit (110) is turned into the rearview-mirror-mode orientation from the display-mode orientation by control of the orientation controller (123) during transition from the display mode to the rearview mirror mode, and
turn off the image display (112) at the time point.

5. The vehicle-mountable display device (100) according to claim 4, wherein the image display controller (122) is configured to increases brightness of the image display (112) gradually as the orientation of the image display unit (110) changes from the display-mode orientation to the rearview-mirror-mode orientation during transition from the display mode to the rearview mirror mode.

6. The vehicle-mountable display device (100) according to any one of claims 1 to 3, further comprising
an image display controller (122) for controlling the image display (112),
wherein the image display controller (122) is configured to:
increase brightness of the image display (112) gradually as the orientation of the image display unit (110) changes from the display-mode orientation to the rearview-mirror-mode orientation during transition from the display mode to the rearview mirror mode;
then, decrease the brightness of the image display (112) gradually from a time point when the orientation of the image display unit (110) is turned into the rearview-mirror-mode orientation; and
then, turn off the image display (112).

7. The vehicle-mountable display device (100) according to any one of claims 1 to 3, further comprising:
an image display controller (122) for controlling the image display; and
an image processor (101) for processing the image captured by the imaging unit (200),
wherein the image processor (101) is configured to increase a contrast of the image gradually as the orientation of the image display unit (110) changes from the display-mode orientation to the rearview-mode orientation by control of the orientation controller (123) during transition from the display mode to the rearview mirror mode, and
wherein the image display controller (122) is configured to:
turn on the image display (112) continuously until a time point when the orientation of the image display unit (110) is turned into the rearview-mirror-mode orientation during the transition from the display mode to the rearview mirror mode; and
turn off the image display (112) at the time point.

8. The vehicle-mountable display device (100) according to any one of claims 1 to 3, further comprising:
an image display controller (122) for controlling the image display; and
an image processor (101) for processing the image captured by the imaging unit (200),
wherein the image processor (101) is configured to:
increase contrast of the image gradually as the orientation of the image display unit (110) changes from the display-mode orientation to the rearview-mirror-mode orientation by control of the orientation controller (123) during transition from the display mode to the rearview mirror mode; and
decrease the contrast of the image up to a contract at the display mode gradually from a time point when the orientation of the image display unit (110) is turned into the rearview-mirror-mode orientation; and
wherein the image display controller (122) is configured to:
turn on the image display (112) continuously until the contrast of the image decreases to the contrast in the display mode; and
turn off the image display (112) when the contrast of the image decreases to the contrast at the display mode.

9. The vehicle-mountable display device (100) according to any one of claims 4 to 8, further comprising
an image processor (101) for processing the image captured by the imaging unit (200),
wherein the image processor (101) is configured to superimpose an indicator image on the image captured by the imaging unit (200) during the transition from the display mode to the rearview mirror mode, the indicator image indicating that the image display unit (110) is in transition of mode; and
wherein the image display (112) displays the image having the indicator image is superimposed thereon.

10. The vehicle-mountable display device (100) according to any one of claims 4 to 9, further comprising
a switching instruction unit (105) for instructing switching between the display mode and the rearview mirror mode,
wherein the orientation controller (123) is configured to:
change the orientation of the image display (112) from the display-mode orientation to the rearview-mirror-mode orientation at a normal speed in response to an instruction from the switching instruction unit instructing to switch from the display mode to the rearview mirror mode; and
change the orientation of the image display (112) from the display-mode orientation to the rearview-mirror-mode orientation at a speed faster than the normal speed when abnormality occurs.

## Patentansprüche

1. Fahrzeugmontierbare Anzeigevorrichtung (100), aufweisend:
eine Bildanzeigeeinheit (110), die konfiguriert ist, um an einer Position eines inneren Rückspiegels in einem Fahrerhaus (1002) eines Fahrzeugs (1001) montiert zu werden, wobei die Bildanzeigeeinheit (110) aufweist:
eine Bildanzeige (112), die ein von einer im Fahrzeug (1001) montierten bildgebenden Einheit (200) erfasstes Bild anzeigen kann,
**dadurch gekennzeichnet, dass** sie umfasst:
einen Halbspiegel (111), angeordnet auf einer Vorderfläche der Bildanzeige (112);
eine Antriebseinheit (104) zum Antreiben der Bildanzeigeeinheit (110); und
eine Ausrichtungssteuerung (123) zum Steuern der Antriebseinheit zum Steuern einer Ausrichtung der Bildanzeigeeinheit (110),
wobei
die Ausrichtungssteuerung (123) konfiguriert ist zum:
Drehen der Ausrichtung der Bildanzeigeeinheit (110) in eine Rückspiegelmodus-Ausrichtung, wenn die Bildanzeigeeinheit (110) in einem Rückspiegelmodus arbeitet, in dem der Halbspiegel als Rückspiegel verwendet wird; und
Drehen der Ausrichtung der Bildanzeigeeinheit (110) in eine Anzeigemodus-Ausrichtung, die sich von der Rückspiegelmodus-Ausrichtung unterscheidet, wenn die Bildanzeigeeinheit (110) in einem Anzeigemodus arbeitet, in dem die Bildanzeige (112) das erfasste Bild anzeigt, und
wobei eine normale Linie des Halbspiegels (111) in der Anzeigemodus-Ausrichtung näher an einem Fahrer ist als die normale Linie des Halbspiegels (111) in der Rückspiegelmodus-Ausrichtung.

2. Fahrzeugmontierbare Anzeigevorrichtung (100) nach Anspruch 1, wobei die Anzeigemodus-Ausrichtung derart positioniert ist, dass die Bildanzeigeeinheit (110) eine Vorderfläche hat, wenn der Halbspiegel (111) im Wesentlichen direkt dem Fahrer zugewandt ist.

3. Fahrzeugmontierbare Anzeigevorrichtung (100) nach Anspruch 1, wobei die Anzeigemodus-Ausrichtung eine Ausrichtung ist, die im Voraus vom Fahrer bestimmt wird.

4. Fahrzeugmontierbare Anzeigevorrichtung (100) nach einem der Ansprüche 1 bis 3, ferner aufweisend:
eine Bildanzeige-Steuereinrichtung (122) zum Steuern der Bildanzeige (112),
wobei die Bildanzeige-Steuereinrichtung (122) konfiguriert ist zum:
Einschalten der Bildanzeigeeinheit (110) kontinuierlich bis zu einem Zeitpunkt, wenn die Ausrichtung der Bildanzeigeeinheit (110), gesteuert durch die Ausrichtungssteuerung (123) während des Übergangs vom Anzeigemodus auf den Rückspiegelmodus, von der Anzeigemodus-Ausrichtung in die Rückspiegelmodus-Ausrichtung gedreht wird, und
Abschalten der Bildanzeige (112) zu dem Zeitpunkt.

5. Fahrzeugmontierbare Anzeigevorrichtung (100) nach Anspruch 4, wobei die Bildanzeige-Steuereinrichtung (122) konfiguriert ist zum schrittweisen Erhöhen der Helligkeit der Bildanzeige (112), wenn sich die Ausrichtung der Bildanzeigeeinheit (110) von der Anzeigemodus-Ausrichtung in die Rückspiegelmodus-Ausrichtung während des Übergangs vom Anzeigemodus auf den Rückspiegelmodus ändert.

6. Fahrzeugmontierbare Anzeigevorrichtung (100) nach einem der Ansprüche 1 bis 3, ferner aufweisend:
eine Bildanzeige-Steuereinrichtung (122) zum Steuern der Bildanzeige (112),
wobei die Bildanzeige-Steuereinrichtung (122) konfiguriert ist zum:
schrittweisen Erhöhen der Helligkeit der Bildanzeige (112), wenn sich die Ausrichtung der Bildanzeigeeinheit (110) von der Anzeigemodus-Ausrichtung in die Rückspiegelmodus-Ausrichtung während des Übergangs vom Anzeigemodus in den Rückspiegelmodus ändert;
danach schrittweisen Verringern der Helligkeit der Bildanzeige (112) ab einem Zeitpunkt, wenn die Ausrichtung der Bildanzeigeeinheit (110) in die Rückspiegelmodus-Ausrichtung gedreht wird; und
danach Abschalten der Bildanzeige (112).

7. Fahrzeugmontierbare Anzeigevorrichtung (100) nach einem der Ansprüche 1 bis 3, ferner aufweisend:
eine Bildanzeige-Steuereinrichtung (122) zum Steuern der Bildanzeige; und
einen Bildprozessor (101) zum Verarbeiten des von der bildgebenden Einheit (200) erfassten Bildes,
wobei der Bildprozessor (101) konfiguriert ist zum schrittweisen Erhöhen eines Kontrasts des Bildes, wenn sich die Ausrichtung der Bildanzeigeeinheit (110), gesteuert durch die Ausrichtungssteuerung (123) während des Übergangs vom Anzeigemodus auf den Rückspiegelmodus, von der Anzeigemodus-Ausrichtung in die Rückspiegelmodus-Ausrichtung ändert, und
wobei die Bildanzeige-Steuereinrichtung (122) konfiguriert ist zum:
Einschalten der Bildanzeige (112) kontinuierlich bis zu einem Zeitpunkt, wenn die Ausrichtung der Bildanzeigeeinheit (110), während des Übergangs vom Anzeigemodus auf den Rückspiegelmodus, in die Rückspiegelmodus-Ausrichtung gedreht wird; und
Abschalten der Bildanzeige (112) zu dem Zeitpunkt.

8. Fahrzeugmontierbare Anzeigevorrichtung (100) nach einem der Ansprüche 1 bis 3, ferner aufweisend:
eine Bildanzeige-Steuereinrichtung (122) zum Steuern der Bildanzeige; und
einen Bildprozessor (101) zum Verarbeiten des von der bildgebenden Einheit (200) erfassten Bildes,
wobei der Bildprozessor (101) konfiguriert ist zum:
schrittweisen Erhöhen eines Kontrasts des Bildes, wenn sich die Ausrichtung der Bildanzeigeeinheit (110), gesteuert durch die Ausrichtungssteuerung (123) während des Übergangs vom Anzeigemodus auf den Rückspiegelmodus, von der Anzeigemodus-Ausrichtung in die Rückspiegelmodus-Ausrichtung ändert, und
schrittweisen Verringern des Kontrasts des Bildes bis zu einem Kontrast im Anzeigemodus ab einem Zeitpunkt, wenn die Ausrichtung der Bildanzeigeeinheit (110) in die Rückspiegelmodus-Ausrichtung gedreht wird, und
wobei die Bildanzeige-Steuereinrichtung (122) konfiguriert ist zum:
Einschalten der Bildanzeige (112) kontinuierlich, bis der Kontrast des Bildes zum Kontrast im Anzeigemodus verringert; und
Abschalten der Bildanzeige (112), wenn der Kontrast des Bildes auf den Kontrast im Anzeigemodus verringert.

9. Fahrzeugmontierbare Anzeigevorrichtung (100) nach einem der Ansprüche 4 bis 8, ferner aufweisend:
einen Bildprozessor (101) zum Verarbeiten des von der bildgebenden Einheit (200) erfassten Bildes,
wobei der Bildprozessor (101) konfiguriert ist zum Überlagern eines Indikatorbildes über dem von der bildgebenden Einheit (200) erfassten Bild während des Übergangs vom Anzeigemodus in den Rückspiegelmodus, wobei das Indikatorbild angibt, dass sich die Bildanzeigeeinheit (110) im Übergang des Modus befindet; und
wobei die Bildanzeige (112) das Bild anzeigt, dem das Indikatorbild überlagert ist.

10. Fahrzeugmontierbare Anzeigevorrichtung (100) nach einem der Ansprüche 4 bis 9, ferner aufweisend:
eine Schaltanweisungseinheit (105) zum Anweisen eines Schaltvorgangs zwischen dem Anzeigemodus und dem Rückspiegelmodus,
wobei die Ausrichtungssteuerung (123) konfiguriert ist zum:
Ändern der Ausrichtung der Bildanzeige (112) von der Anzeigemodus-Ausrichtung in die Rückspiegelmodus-Ausrichtung mit einer normalen Geschwindigkeit als Reaktion auf eine Anweisung von der Schaltanweisungseinheit zum Umschalten vom Anzeigemodus auf den Rückspiegelmodus; und
Ändern der Ausrichtung der Bildanzeige (112) von der Anzeigemodus-Ausrichtung in die Rückspiegelmodus-Ausrichtung mit einer höheren Geschwindigkeit als der normalen Geschwindigkeit, wenn eine Anomalität auftritt.

## Revendications

1. Dispositif d'affichage embarqué dans un véhicule (100) comprenant :
une unité d'affichage d'image (110) configurée pour être montée à l'emplacement d'un rétroviseur intérieur dans un habitacle (1002) d'un véhicule (1001), l'unité d'affichage d'images (110) comprenant
un afficheur d'image (112) capable d'afficher une image capturée par l'unité d'imagerie (200) montée dans le véhicule (1001),
**caractérisé en ce qu'**il comprend
un demi-miroir (111) disposé sur une surface avant de l'afficheur d'image (112) ;
une unité d'entraînement (104) destinée à entraîner l'unité d'affichage d'image (110) ; et
un contrôleur d'orientation (123) destiné à contrôler l'unité d'entraînement afin de contrôler une orientation de l'unité d'affichage d'image (110),
dans lequel
le contrôleur d'orientation (123) est configuré pour :
modifier l'orientation de l'unité d'affichage d'image (110) en une orientation en mode rétroviseur lorsque l'unité d'affichage d'image (110) fonctionne dans un mode de rétroviseur dans lequel le demi-miroir est utilisé comme rétroviseur ; et
modifier l'orientation de l'unité d'affichage d'image (110) en une orientation en mode d'affichage différente de l'orientation en mode rétroviseur lorsque l'unité d'affichage d'image (110) fonctionne dans un mode d'affichage dans lequel l'afficheur d'image (112) affiche l'image capturée, et
dans lequel une ligne normale du demi-miroir (111) dans l'orientation en mode d'affichage est plus proche d'un conducteur que la ligne normale du demi-miroir (111) dans l'orientation en mode rétroviseur.

2. Dispositif d'affichage embarqué dans un véhicule (100) selon la revendication 1, dans lequel l'orientation en mode d'affichage est positionnée de sorte que l'unité d'affichage d'image (110) ayant une surface avant en guise de demi-miroir (111) soit sensiblement tournée directement vers le conducteur.

3. Dispositif d'affichage embarqué dans un véhicule (100) selon la revendication 1, dans lequel l'orientation en mode d'affichage est une orientation prédéterminée par le conducteur.

4. Dispositif d'affichage embarqué dans un véhicule (100) selon l'une quelconque des revendications 1 à 3, comprenant en outre
un contrôleur d'afficheur d'image (122) destiné à contrôler l'afficheur d'image (112),
dans lequel le contrôleur d'afficheur d'image (122) est configuré pour :
déclencher l'unité d'affichage d'image (110) en continu jusqu'à un moment auquel l'orientation de l'unité d'affichage d'image (110) passe de l'orientation en mode d'affichage à l'orientation en mode rétroviseur à l'aide du contrôleur d'orientation (123) pendant le passage du mode d'affichage au mode rétroviseur, et
désactiver l'afficheur d'image (112) à ce même moment.

5. Dispositif d'affichage embarqué dans un véhicule (100) selon la revendication 4, dans lequel le contrôleur d'afficheur d'image (122) est configuré pour augmenter la luminosité de l'afficheur d'image (112) progressivement lorsque l'orientation de l'unité d'affichage d'image (110) passe de l'orientation en mode d'affichage à l'orientation en mode rétroviseur pendant le passage du mode d'affichage au mode rétroviseur.

6. Dispositif d'affichage embarqué dans un véhicule (100) selon l'une quelconque des revendications 1 à 3, comprenant en outre
un contrôleur d'afficheur d'image (122) destiné à contrôler l'afficheur d'image (112),
dans lequel le contrôleur d'afficheur d'image (122) est configuré pour :
augmenter la luminosité de l'afficheur d'image (112) progressivement lorsque l'orientation de l'unité d'affichage d'image (110) passe de l'orientation en mode d'affichage à l'orientation en mode rétroviseur pendant le passage du mode d'affichage au mode rétroviseur ;
puis, réduire la luminosité de l'afficheur d'image (112) progressivement à partir du moment auquel l'orientation de l'unité d'affichage d'image (110) devient une orientation en mode rétroviseur ; et
puis, désactiver l'afficheur d'image (112).

7. Dispositif d'affichage embarqué dans un véhicule (100) selon l'une quelconque des revendications 1 à 3, comprenant en outre :
un contrôleur d'afficheur d'image (122) destiné à contrôler l'afficheur d'image ; et
un processeur d'image (101) destiné à traiter l'image capturée par l'unité d'imagerie (200),
dans lequel le processeur d'image (101) est configuré pour augmenter un contraste de l'image progressivement lorsque l'orientation de l'unité d'affichage d'image (110) passe de l'orientation en mode d'affichage à l'orientation en mode rétroviseur à l'aide du contrôleur d'orientation (123) pendant le passage du mode d'affichage au mode rétroviseur, et
dans lequel le contrôleur d'affichage d'image (122) est configuré pour :
déclencher l'afficheur d'image (112) en continu jusqu'à un moment auquel l'orientation de l'unité d'affichage d'image (110) devient l'orientation en mode rétroviseur pendant le passage du mode d'affichage au mode rétroviseur ; et
désactiver l'afficheur d'image (112) à ce même moment.

8. Dispositif d'affichage embarqué dans un véhicule (100) selon l'une quelconque des revendications 1 à 3, comprenant en outre :
un contrôleur d'afficheur d'image (122) destiné à contrôler l'afficheur d'image ; et
un processeur d'image (101) destiné à traiter l'image capturée par l'unité d'imagerie (200),
dans lequel le processeur d'image (101) est configuré pour :
augmenter le contraste de l'image progressivement lorsque l'orientation de l'unité d'affichage d'image (110) passe de l'orientation en mode d'affichage à l'orientation en mode rétroviseur à l'aide du contrôleur d'orientation (123) pendant le passage du mode d'affichage au mode rétroviseur ; et
réduire le contraste de l'image jusqu'à un contraste en mode d'affichage, progressivement entre un moment auquel l'orientation de l'unité d'affichage d'image (110) passe à une orientation en mode rétroviseur ; et
dans lequel le contrôleur d'afficheur d'image (122) est configuré pour :
déclencher l'afficheur d'image (112) en continu jusqu'à ce que le contraste de l'image diminue jusqu'au contraste en mode d'affichage ; et
désactiver l'afficheur d'image (112) lorsque le contraste de l'image diminue jusqu'au contraste en mode d'affichage.

9. Dispositif d'affichage embarqué dans un véhicule (100) selon l'une quelconque des revendications 4 à 8, comprenant en outre
un processeur d'image (101) destiné à traiter l'image capturée par l'unité d'imagerie (200),
dans lequel le processeur d'image (101) est configuré pour superposer une image d'indicateur sur l'image capturée par l'unité d'imagerie (200) pendant le passage du mode d'affichage au mode rétroviseur, l'image d'indicateur indiquant que l'unité d'affichage d'image (110) est en train de changer de mode ; et
dans lequel l'afficheur d'image (112) affiche l'image sur laquelle est superposée l'image d'indicateur.

10. Dispositif d'affichage embarqué dans un véhicule (100) selon l'une quelconque des revendications 4 à 9, comprenant en outre
une unité d'instruction de basculement (105) destinée à demander le passage du mode d'affichage au mode rétroviseur,
dans lequel le contrôleur d'orientation (123) est configuré pour :
faire passer l'orientation de l'afficheur d'image (112) de l'orientation en mode d'affichage à l'orientation en mode rétroviseur à une vitesse normale en réponse à une instruction de l'unité d'instruction de basculement qui demande de passer du mode d'affichage au mode rétroviseur ; et
faire passer l'orientation de l'afficheur d'image (112) de l'orientation en mode d'affichage à l'orientation en mode rétroviseur à une vitesse supérieure à la vitesse normale en cas d'anomalie.
